Europäisches Patentamt

European Patent Office

Office européen des brevets

(11) Veröffentlichungsnummer: **0 459 477 A2**

## (12) EUROPÄISCHE PATENTANMELDUNG

(21) Anmeldenummer: **91108851.6**

(22) Anmeldetag: **29.05.91**

(51) Int. Cl.5: **G06K 19/07**

(30) Priorität: **30.05.90 DE 4017420**

(43) Veröffentlichungstag der Anmeldung:
**04.12.91 Patentblatt 91/49**

(84) Benannte Vertragsstaaten:
**AT BE CH DE DK ES FR GB GR IT LI LU NL SE**

(71) Anmelder: **MICO-DATA ELEKTRONISCHE STEUEREINRICHTUNGEN GmbH**
**Zum Henkerberg 12**
**W-7776 Owingen(DE)**

(72) Erfinder: **Schäfer, Rainhard c/o Mico-Data Elektronische**
**Steuereinrichtungen GmbH Zum Henkerberg 12**
**W-7776 Owingen(DE)**

(74) Vertreter: **Goddar, Heinz J., Dr. et al**
**FORRESTER & BOEHMERT**
**Widenmayerstrasse 4/I**
**W-8000 München 22(DE)**

(54) Datenträger.

(57) Es wird ein Datenträger beschrieben, der folgendes umfaßt: einen Speicher zum Speichern von Daten, eine erste Sendeeinriohtung zum Senden von Signalen entsprechend den gespeicherten Daten an eine erste Empfangseinrichtung, die an eine Datenverarbeitungsanlage angeschlossen ist, und eine Energieversorgung.

Der Datenträger ist im Vergleich mit herkömmlichen Datenträgern, wie beispielsweise Barcodes und Magnetstreifenkarten universeller einsetzbar und hat eine höhere Speicherkapazität, wobei die gespeicherten Daten berührungsfrei und mit hoher Übertragungssicherheit ausgelesen werden können.

EP 0 459 477 A2

Die Erfindung betrifft einen Datenträger nach dem Oberbegriff des Patentanspruchs 1. Ein derartiger Datenträger ist aus der EP 03 56 125 bekannt.

In der industriellen Produktion und Lagerung werden bisher Barcodes verwendet, um Produktions- oder Lagereinheiten zu kennzeichnen und/oder Informationen betreffend das zu verarbeitende oder zu produzierende Produkt oder betreffend dessen Lagerung zur Verfügung zu stellen.

Barcodes haben eine relativ geringe Speicherkapazität, üblicherweise sind nur acht Bit gespeichert. Das Auslesen der Barcodes mittels Scannern bedarf relativ stark eingegrenzter Relativgeschwindigkeiten des Barcodes in bezug auf den Scanner und ist ferner mit einer großen Fehlerwahrscheinlichkeit behaftet. Die Anlagen zur Verarbeitung der in den Barcodes gespeicherten Daten sind immer so ausgelegt, daß ein Auslesen des Barcodes immer mit einer Verarbeitung der so ermittelten Daten verbunden ist, so daß kein bloßes Lesen des Barcodes möglich ist, ohne daß die Daten gleich weiterverarbeitet werden, weshalb ein Barcode, der sich von einer Produktions- oder Lagereinheit gelöst hat und beispielsweise am Boden liegt, nicht identifiziert und der ihm zugehörigen Einheit zugeordnet werden kann.

Neben den Datenträgern in Form von Barcodes sind auch Magnetstreifenkarten bekannt. Diese weisen aber ebenfalls eine relativ geringe Speicherkapazität auf. Darüber hinaus können sie bzw. die aufgebrachten Magnetstreifen nur mittels eines auf dem Magnetstreifen selbst aufliegenden Magnetkopfes mit definierter Lesegeschwindigkeit gelesen werden, wobei die so vorgenommene Datenübertragung zumindest dann mit großen Fehlern behaftet ist, wenn die Lesegeschwindigkeit nicht konstant oder der Leseweg nicht exakt parallel zu dem Magnetstreifen ausgerichtet sind.

Magnetstreifenkarten können nicht in der industriellen Produktion und Lagerhaltung eingesetzt werden, weil ein berührungsfreies Lesen nicht möglich ist. Sie haben weite Verbreitung als Personenidentifikationsmittel und bei der automatischen Geldausgabe gefunden.

Der Erfindung liegt die Aufgabe zugrunde, den aus der EP 03 56 125 bekannten Datenträger so auszubilden, daß er berührungsfrei ausgelesen werden kann.

Erfindungsgemäß wird die gestellte Aufgabe durch einen Datenträger mit den im kennzeichnenden Teil des Patentanspruchs angegebenen Merkmalen gelöst.

Da der erfindungsgemäße Datenträger berührungsfrei ausgelesen werden kann, kann er sowohl in der industriellen Produktion und Lagerhaltung als auch für die Personenidentifizierung eingesetzt werden. Die Speicherkapazität ist hoch, weil sie nicht, wie bei Barcodes und Magnetstreifen, durch die Länge des Datenträgers begrenzt ist. Die Übertragungssicherheit ist hoch, weil nicht entlang einer vorgegebenen Strecke gelesen werden muß, sondern die Daten gesendet werden.

Erfindungsgemäß kann der Speicher ein PROM, ein EPROM oder ein EEPROM sein.

Die Energieversorgung umfaßt mindestens eine Solarzelle.

Um den Datenträger auch bei schwacher Beleuchtung betreiben zu können, ohne daß die für die Energieversorgung notwendige Solarzellenfläche und damit die Gesamtabmessungen des Datenträgers erhöht werden müßten, ist erfindungsgemäß vorgesehen, daß an der Datenverarbeitungsanlage eine Lichtquelle vorgesehen ist, welche den Datenträger bzw. die darauf befindlichen Solarzellen beim Senden bescheint, so daß eine sichere Datenübertragung gewährleistet ist.

Alternativ zu der Energieversorgung über Solarzellen aber auch zusätzlich, beispielsweise zum Puffern, kann erfindungsgemäß vorgesehen sein, daß die Energieversorgung mindestens einen Akkumulator umfaßt.

Ferner kann die Energieversorgung auch mindestens eine Batterie umfassen.

Um den Datenträger "dynamisch" auszugestalten, ist erfindungsgemäß bevorzugt, eine zweite Empfangseinrichtung zum Empfangen von Signalen von einer zweiten Sendeeinrichtung, die an die Datenverarbeitungsanlage angeschlossen ist, vorzusehen.

Dadurch können die auf dem Datenträger gespeicherten Daten nicht nur gelesen, sondern auch von der Datenverarbeitungsanlage verändert werden.

Um die Datenverarbeitungsanlage kapazitätsmäßig zu entlasten, ist bevorzugt, auf den Datenträger einen Prozessor zum Verarbeiten von Daten vorzusehen. Dieser könnte beispielsweise auf einen entsprechenden Impuls von der Datenverarbeitungsanlage hin eine erforderliche Veränderung der gespeicherten Daten vornehmen. Er kann aber auch einfach eine Vorverarbeitung der gespeicherten Daten vor dem Senden ausführen.

Erfindungsgemäß können die Sendeeinrichtungen Infrarotsender und die Empfangseinrichtungen Infrarotempfänger umfassen, wobei die Signale Infrarotsignale sind.

Es kann aber auch vorgesehen sein, daß die Sendeeinrichtungen Ultraschallsender und die Empfangseinrichtungen Ultraschllallempfänger umfassen und daß die Signale Ultraschallsignale sind.

Es kann auch vorgesehen sein, daß eine Signalstrecke auf Infrarotbasis und die andere Signalstrecke auf Ultraschallbasis realisiert ist, um gegenseitige Beeinflussungen der beiden Signalstrecken sicher auszuschließen.

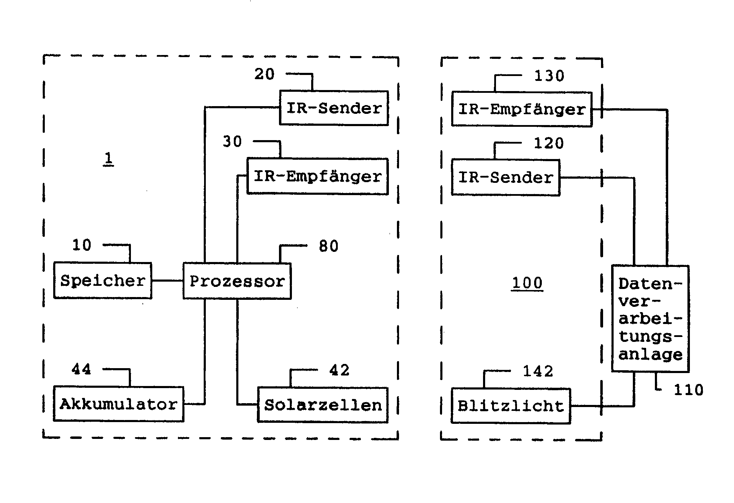

Weitere Vorteile der Erfindung ergeben sich aus der nachstehenden Beschreibung, in der ein bevorzugtes Ausführungsbeispiel der Erfindung unter Bezugnahme auf die beiliegende Zeichnung mit weiteren Einzelheiten näher erläutert ist.

Die Figur zeigt schematisch einen Datenträger 1, der zum Lesen/Schreiben von Daten gegenüber einem Schreib-/Lesegerät 100 dargestellt ist.

Der Datenträger 1 umfaßt einen Speicher 10, einen Infrarotsender 20, einen Infrarotempfänger 30, Solarzellen 42, einen Akkumulator 44 und einen Prozessor 80.

Das Schreib-/Lesegerät 100 umfaßt einen Infrarotsensor 120, einen Infrarotempfänger 130 und ein Blitzlicht 142. Alle drei genannten Elemente des Schreib-/Lesegerätes 100 sind an eine Datenverarbeitungsanlage 110 angeschlossen.

Nachstehend ist die Betriebsweise des Datenträgers 1 im Zusammenspiel mit dem Schreib-/Lesegerät 100 erläutert.

Der Datenträger 1 wird derart in die Nähe des Schreib-/Lesegerätes 100 gebracht, daß die Infrarotempfänger 30 und 130 die von den Infrarotsendern 20 und 120 gesendeten Infrarotsignale empfangen können, wobei während des Datenaustausches mittels der genannten Infrarotsignale das Blitzlicht 142 in dem Schreib-/Lesegerät 100 angesteuert wird, so daß der Datenträger 1 über die Solarzellen 42 mit Energieversorgt wird. Versuche haben gezeigt, daß eine Belichtungszeit von ca. 30ms genügt, um den Speicher 10 auszulesen und neu zu belegen.

Der Akkumulator 44 ist aus zwei Gründen vorgesehen: Zum einen dient er der Glättung des Spannungstoßes, der von den Solarzellen 42 ausgeht. Zum anderen wird die Energieversorgung über den Akkumulator 44 sichergestellt, wenn das Blitzlicht aus irgendwelchen Gründen ausfällt oder die von den Solarzellen 42 infolge Verschmutzung oder dergleichen erzeugte Spannung nicht ausreicht.

Der Speicher 10 wird nach diesem Ausführungsbeispiel von einem EEPROM gebildet, so daß die in dem Speicher 10 abgelegten Daten beliebig verändert werden können, was zur Flexibilität des Datenträgers 1 beiträgt.

Die Steuerung des Lese- und Schreibvorgangs wird von dem Prozessor 80 in dem Datenträger 1 vorgenommen. Es sei aber ausdrücklich darauf hingewiesen, daß der Prozessor 80 nicht unbedingt erforderlich ist, weil die Steuerung auch mittels der Datenverarbeitungsanlage 110 ausgeführt werden kann, indem das Blitzlicht 142 angesteuert wird, woraufhin der Datenträger beginnt, Signale entsprechend dem Speicherinhalt auszusenden.

Im Gegensatz zu den Datenträgern nach dem Stand der Technik, nämlich Barcodes und Magnetkarten, muß der erfindungsgemäße Datenträger 1 keine exakt einzuhaltende Position bezüglich des Schreib-/Lesegerätes 100 einhalten, bzw. in einer ganz bestimmten Art und Weise an dem Lesegerät 100 vorbeigeführt werden. Vielmehr werden die Infrarotsignale auch noch empfangen, wenn der Datenträger 1 bezüglich dem Schreib-/Lesegerät 100 eine in Bezug auf die optimale Stellung um 90° gedrehte Stellung hat.

Ferner kann der Datenträger beim Lese/Schreibvorgang mit einer Geschwindigkeit von bis zu 1 m/s in Bezug auf das Schreib-/Lesegerät 100 bewegt werden, ohne daß die Datenübertragung sich verschlechtert.

Insgesamt ergibt sich eine Fehlerquote von $10^{-5}$ bis $10^{-6}$.

Im Vergleich mit Barcodes und Magnetstreifenkarten ist die Speicherkapazität des erfindungsgemäßen Datenträgers sehr groß. Während nämlich beispielsweise Barcodes eine Speicherkapazität von circa acht Bit haben, können auf einem EEPROM 1KB bis 16KB abgelegt werden.

Aus dem überaus weiten Feld der Anwendungsmöglichkeit des erfindungsgemäßen Datenträgers sei beispielhaft auf folgende Anwendungsmöglichkeiten hingewiesen:

1. Der erfindungsgemäße Datenträger kann in der industriellen Produktion und Lagerhaltung auf Transportstrecken eingesetzt werden. Dabei ist der Datenträger an Halterungen für zu lagernde Produkte oder für weiterzuverarbeitende Zwischenprodukte angebracht und wird beim Passieren eines Lesegerätes ausgelesen, wie dies schon mit Barcodes praktiziert wird.

Im Gegensatz zu herkömmlichen Barcodes kann der erfindungsgemäße Datenträger aber wesentlich größere Datenmengen speichern und birgt in sich die Möglichkeit, Veränderungen der gespeicherten Daten vorzunehmen, was bei Barcodes nicht möglich ist.

Darüber hinaus ist der erfindungsgemäße Datenträger nahezu beliebig oft wiederverwendbar, weil er durch entsprechendes Behandeln des EEPROM umprogrammiert werden kann, während Barcodes unveränderbar sind. Insofern ist der Herstellungspreis von ca. DM 35,--für den erfindungsgemäßen Datenträger gegenüber DM 3,-- bis DM 5,-- für einen Barcode ohne weiteres zu amortisieren.

Ferner können der erfindungsgemäße Datenträger, und insbesondere die Solarzellen und die Infrarotsender und -empfänger eingegossen werden, so daß der Datenträger höchst unempfindlich gegen Umwelteinflüsse, wie etwa mechanische Beanspruchung, Temperaturschwankungen und dergleichen ist. Bei Versuchen hat sich herausgestellt, daß der erfindungsgemäße Datenträger in einem Temperaturbereich von -70°C bis +180°C voll funktionsfähig ist.

Durch die große Speicherkapazität kann die Datenverarbeitungsanlage, welche in der industriellen Produktion oder Lagerhaltung Optimierungen und Steuerungen vornimmt, von Daten entlastet werden, weil diese auf dem Datenträger selbst speicherbar sind. Ist der Datenträger zusätzlich mit einem Infrarotempfänger zum Einschreiben von Daten und mit einem Prozessor versehen, können auch Datenverarbeitungen dezentral, d.h. in dem Datenträger bzw. in der Vielzahl der Datenträger vorgenommen werden, was die zentrale Datenverarbeitungsanlage entlastet und die Reaktions- und Weiterverarbeitungsgeschwindigkeiten stark erhöht.

Darüber hinaus ist die Kompatibilität beim Austausch von Datenträgern zwischen einer Produktionsstätte und einer anderen wesentlich leichter herzustellen, weil die Programme zum Verarbeiten der in dem Datenträger gespeicherten Daten wesentlich universeller sein können, als dies bei Barcodes der Fall ist, welche wegen der sehr geringen Speicherkapazität sehr ausgeklügelte, d.h. spezielle Verarbeitungsprogramme benötigen.

Schließlich kann die Verarbeitung der auf dem Datenträger gespeicherten Daten noch dadurch verbessert werden, daß Gruppen von Lesegeräten jeweils einem sogenannten Arbeitsplatzrechner zugeordnet werden, in dem ein Programm zur Verarbeitung der jeweils ausgelesenen Daten gespeichert ist, wodurch die bei der Verarbeitung verwendeten Programme, welche Zugriffe auf zentrale Datenbanken steuern, dezentralisierbar sind. Auch dies ist bei Barcodes nicht möglich, weil die Verarbeitungsprogramme zu kompliziert und umfangreich sind, als daß sie dezentral, und nicht innerhalb einer großen zentralen Verarbeitungsanlage hand-habbar wären.

2. Der erfindungsgemäße Datenträger kann auch als persönliche Identifikationskarte für Wach- und Sicherheitsunternehmen Verwendung finden. Das gleiche gilt für Scheckkarten und Hotel-"Schlüssel", wobei der erfindungsgemäße Datenträger durch seine hohe Speicherkapazität, die höchst sichere und berührungsfreie Datenübertragung und die Unempfindlichkeit gegen Umwelteinflüsse den bisher für die genannten Zwecke verwendeten Magnetkarten überlegen ist.

Insbesondere als Hotel-"Schlüssel", d.h. als Zugangsberechtigung zu einem Hotelzimmer liegt der besondere Vorteil des erfindungsgemäßen Datenträgers in der Wiederverwendbarkeit wegen der Einfachheit des Umprogrammierens. So kann der Hotel-"Schlüssel" trotz Personenbezogenheit, die dadurch realisierbar ist, daß beispielsweise eine persönliche Identifizierungskennzahl auf dem Datenträger gespeichert wird, die beim Betreten des Hotelzimmers mittels eines Tastenfeldes einzugeben ist, beliebig oft wiederverwendet werden.

Unter diesem Aspekt ist ferner von besonderem Vorteil, daß das Lesen und Schreiben berührungsfrei und somit verschleißfrei erfolgt, was bei herkömmlichen Magnetstreifenkarten nicht der Fall ist.

Die Tatsache, daß der erfindungsgemäße Datenträger auch derart ausgelegt sein kann, daß er von dem Schreib-/Lesegerät auch verändert werden kann, eröffnet ferner die Möglichkeit, beispielsweise bei Wach- und Sicherheitsdiensten auf dem Datenträger zu speichern, ob der betreffende Mitarbeiter, der mit dem Datenträger arbeitet, auch tatsächlich alle Stationen in der dafür vorgeschriebenen Zeit angelaufen hat.

Es sei noch einmal darauf hingewiesen, daß die oben unter 1. und 2. genannten Verwendungsmöglichkeiten des erfindungsgemäßen Datenträgers nur beispielhaft genannt sind, während Einsatzmöglichkeiten auf allen Gebieten beispielsweise der Identifizierung und der Individualsteuerung gegeben sind.

Die in der vorstehenden Beschreibung, den Ansprüchen sowie der Zeichnungen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Datenträger, mit
   - einem Speicher (10) zum Speichern von Daten,
   - einer ersten Sendeeinrichtung (20) zum Senden von Signalen entsprechend den gespeicherten Daten an eine erste Empfangseinrichtung (130), die an eine Datenverarbeitungsanlage (110) angeschlossen ist, und
   - einer Energieversorgung (42,44;142),
   dadurch gekennzeichnet, daß die Energieversorgung (42,44;142) mindestens eine Solarzelle (42) an dem Datenträger (1) und eine Lichtquelle (142) an der Datenverarbeitungsanlage (110) umfaßt.

2. Datenträger nach Anspruch 1, dadurch gekennzeichnet, daß der Speicher (10) ein PROM ist.

3. Datenträger nach Anspruch 1, dadurch gekennzeichnet, daß der Speicher (10) ein EPROM ist.

4. Datenträger nach Anspruch 1, dadurch gekennzeichnet, daß der Speicher (10) ein EEPROM ist.

5. Datenträger nach einem der vorangehenden Ansprüche, dadurch gekennzeichnet, daß die Energieversorgung (42,44;142) mindestens einen Akkumulator (44) umfaßt.

6. Datenträger nach einem der vorangehenden Ansprüche, gekennzeichnet durch eine zweite Empfangseinrichtung (30) zum Empfangen von Signalen von einer zweiten Sendeeinrichtung (120), die an die Datenverarbeitungsanlage (110) angeschlossen ist.

7. Datenträger nach einem der vorangehenden Ansprüche, gekennzeichnet durch einen Prozessor (80) zum Verarbeiten von Daten.

8. Datenträger nach einem der vorangehenden Ansprüche, dadurch gekennzeichnet, daß die Sendeeinrichtung (20,120) Infrarotsender und die Empfangseinrichtungen (30,130) Infrarotempfänger umfassen und daß die Signale Infrarotsignale sind.

9. Datenträger nach einem der vorangehenden Ansprüche, dadurch gekennzeichnet, daß die Sendeeinrichtungen (20,120) Ultraschallsender und die Empfangseinrichtungen (30,130) Ultraschallempfänger umfassen und daß die Signale Ultraschallsignale sind.